# EUROPÄISCHE PATENTANMELDUNG

(11) **EP 4 008 935 A1**
(43) Veröffentlichungstag der Anmeldung: **08.06.2022**
(21) Anmeldenummer: 20211671.1
(22) Anmeldetag: 03.12.2020
(51) Int. Cl.: F16K 5/02, F16K 5/16, F16K 11/083, F16K 11/076

(54) **ROTATIONSVENTIL**

(71) Anmelder: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE); Olbrich, Matthias Bernhard, 76437 Rastatt (DE)
(74) Vertreter: Reiser & Partner Patentanwälte mbB

(57) **Zusammenfassung**

Rotationsventil (1), umfassend ein Ventilgehäuse (2) mit einer Ventilkammer (3), wobei die Ventilkammer (3) eine Kammerwand (4) aufweist, in die mindestens zwei Fluidöffnungen (5) eingebracht sind, wobei die Ventilkammer (3) stirnseitig eine Aufnahmeöffnung (6) aufweist, wobei die Ventilkammer (3) einen Ventilkern (7) aufnimmt, wobei der Ventilkern (7) mit einer Kanalstruktur (8) versehen ist, welche mit den Fluidöffnungen (5) zusammenwirkt, wobei der Ventilkern (7) rotatorisch beweglich in der Ventilkammer (3) gelagert ist, wobei die Ventilkammer (3) konisch ausgebildet ist.

## Beschreibung

Die Erfindung betrifft ein Rotationsventil, umfassend ein Ventilgehäuse mit einer Ventilkammer, wobei die Ventilkammer eine Umfangswand aufweist, in die mindestens zwei Fluidöffnungen eingebracht sind, wobei die Ventilkammer stirnseitig eine Aufnahmeöffnung aufweist, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch beweglich in der Ventilkammer gelagert ist.

Ein derartiges Rotationsventil ist beispielsweise aus der DE 10 2018 009 680 A1 bekannt. Rotationsventile der genannten Art finden häufig in Kühlkreisläufen zur Steuerung des Kühlmittelstroms Einsatz. Durch die in das Ventilgehäuse eingebrachten Fluidöffnungen kann ein Kühlfluid ein- und ausströmen. Die in den Ventilkern eingebrachte Kanalstruktur steuert dabei den Kühlmittelstrom, wobei je nach Ausgestaltung und Anzahl der Fluidöffnungen unterschiedliche Kühlkreisläufe angesteuert, der Volumenstrom reguliert oder die Durchflussrichtung angepasst werden können.

Die Ausgestaltung als Rotationsventil ist dabei vorteilhaft, weil eine Anpassung des Kühlmittelstroms durch Drehen des Ventilkerns erfolgt, wobei der entsprechende Aktor zum Drehen des Ventilkerns einfach ausgebildet und einfach ansteuerbar ist. Dementsprechend sind Rotationsventile und die dazugehörigen Aktoren kostengünstig herstellbar. Darüber hinaus benötigen Rotationsventile nur wenig Bauraum.

Dabei ist es auch bekannt, die Elemente des Rotationsventils aus Kunststoff auszubilden. Dabei kann sich aber das Problem ergeben, dass bei einem dichtenden Kontakt zwischen Ventilkern und Ventilgehäuse aufgrund der erforderlichen Anpressung hohe Reibungskräfte und damit ein erhöhter Verschleiß auftreten. Ist der Ventilkern hingegen spielbehaftet in dem Ventilgehäuse angeordnet, sinken zwar die für die Rotation erforderlichen Kräfte und der Verschleiß, es kann sich aber über den Spalt zwischen Ventilgehäuse und Ventilkern eine unerwünschte Leckage ergeben.

Derartige Rotationsventile sind insbesondere vorteilhaft in Bezug auf den Einsatz in Temperierkreisläufen im Bereich der Elektromobilität. Zur Erzielung einer hohen Reichweite von Elektrofahrzeugen ist es beispielsweise erforderlich, elektrische Komponenten zu temperieren. Zu temperierende Komponenten von Elektrofahrzeugen sind dabei insbesondere Akkumulatoren, aber auch die Leistungselektronik oder Steckverbindungen von Schnellladeeinrichtungen. Ein Akkumulator hat eine bestmögliche Kapazität nur in einem sehr kleinen Temperaturspektrum. Daher ist es erforderlich, Akkumulatoren von Elektrofahrzeugen bei tiefen Umgebungstemperaturen zu erwärmen und bei hohen Außentemperaturen oder bei einer hohen Lastabnahme zu kühlen.

Hierzu ist es bekannt, einen Temperierkreislauf vorzusehen, durch welchen ein Temperiermedium strömt. Das Temperiermedium kann dabei je nach Anforderung entweder in einer Heizeinrichtung erwärmt oder in einer Kühleinrichtung abgekühlt werden. Die Steuerung des Temperiermediumstroms kann dabei durch Rotationsventile erfolgen.

Der Erfindung liegt die Aufgabe zugrunde, ein Rotationsventil bereitzustellen, welches bei geringer Leckage und bei geringem Verschleiß eine einfache Verstellbarkeit aufweist.

Diese Aufgabe wird mit den Merkmalen von Anspruch 1 gelöst. Auf vorteilhafte Ausgestaltungen nehmen die Unteransprüche Bezug.

Das erfindungsgemäße Rotationsventil umfasst ein Ventilgehäuse mit einer Ventilkammer, wobei die Ventilkammer eine Umfangswand aufweist, in die mindestens zwei Fluidöffnungen eingebracht sind, wobei die Ventilkammer stirnseitig eine Aufnahmeöffnung aufweist, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch beweglich in der Ventilkammer gelagert ist, wobei die Ventilkammer konisch ausgebildet ist.

Der Ventilkern ist dabei vorzugsweise kongruent zu der Ventilkammer ausgebildet und außenseitig ebenfalls konisch ausgebildet. Dadurch kann der Ventilkern derart in dem Ventilgehäuse montiert sein, dass zwischen Ventilkern und Ventilgehäuse nur ein sehr geringer Spalt entsteht, was die Gefahr einer Leckage reduziert.

Die Ventilkammer ist vorzugsweise durch eine Kammerwand und einen Kammerboden begrenzt, wobei die Kammerwand den Ventilkern umgibt, wobei sich der Durchmesser der Kammerwand ausgehend von dem Kammerboden in Richtung der Aufnahmeöffnung erweitert. Dabei ist vorteilhaft, dass der Ventilkern besonders einfach in die Ventilkammer montierbar ist. Der Außenumfang des Ventilkerns gelangt bei dieser Ausgestaltung erst dann in Kontakt mit der Kammerwand, wenn der Ventilkern vollständig in die Ventilkammer eingeschoben ist. Dadurch vereinfacht sich die Montage des Rotationsventils, weil sich der Ventilkern und das Ventilgehäuse erst berühren, wenn der Ventilkern vollständig in das Ventilgehäuse eingeschoben ist. Dabei kann auch verhindert werden, dass Bestandteile des Ventilkerns, beispielsweise die Kanalstruktur, während der Montage beschädigt werden.

Die außenumfangsseitigen Begrenzungen des Ventilkerns können direkt an der Kammerwand des Ventilgehäuses zur Anlage gelangen. Es ist aber auch denkbar, dass die außenumfangsseitigen Begrenzungen des Ventilkerns, insbesondere im Bereich der Kanalstruktur, mit einer Dichtkontur versehen sind.

Vorzugsweise ist der Ventilkern translatorisch in der Ventilkammer gelagert. Bei dieser Ausgestaltung kann der Ventilkern während des Betriebs eine rein rotatorische, eine rein translatorische oder eine überlagerte translatorisch rotatorischen Bewegung ausführen. Bei einer überlagerten translatorisch rotatorischen Bewegung wird der Ventilkern translatorisch bewegt, wobei sich der Ventilkern aufgrund der konischen Ausgestaltung von Ventilkammer und Ventilkern von der Kammerwand beabstandet. Dabei entsteht ein Spalt, welcher ein Verdrehen des Ventilkerns relativ zu dem Ventilgehäuse bei zu vernachlässigender Reibung ermöglicht.

Ein Verstellen des Ventilkerns erfolgt dabei vorzugsweise derart, dass zunächst eine translatorische Bewegung ausgeführt wird, wobei sich der Ventilkern von der Kammerwand des Ventilgehäuses beabstandet, anschließend wird eine rotatorische Bewegung des Ventilkerns ausgeführt, so dass sich die Kanalstruktur in der gewünschten Art und Weise zu den Fluidöffnungen ausrichtet, gleichzeitig kann eine weitere translatorische Bewegung ausgeführt werden, und zum Schluss wird wieder eine translatorische Bewegung ausgeführt, wobei der Ventilkern wieder so in das Ventilgehäuse eingeführt wird, dass der Außenumfang des Ventilkerns weitestgehend spaltfrei an der Kammerwand des Ventilgehäuses anliegt. Dadurch ist es einerseits möglich, den Ventilkern verschleiß- und reibungsarm zu verstellen. Des Weiteren kann ein Fluidtransport über die Öffnungen des Ventilgehäuses und die Kanalstruktur des Ventilkerns unter Vermeidung einer Leckage erfolgen.

Der Ventilkern kann eine Schaltwelle aufnehmen. Dabei erstreckt sich die Schaltwelle vorzugsweise durch die Mittelachse des rotationssymmetrisch ausgebildeten Ventilkerns hindurch. Die Schaltwelle kann mit einem Aktor wirkverbunden werden, der eine überlagerte Rotations- und Translationsbewegung durchführen kann, um so den Ventilkern zu verstellen.

Dementsprechend kann die Schaltwelle rotatorisch und translatorisch bewegbar sein. Dabei kann die Schaltwelle in dem Ventilgehäuse gelagert sein, wobei eine Lagerung vorzugsweise erfolgt, wenn der Ventilkern vollständig in das Ventilgehäuse eingeschoben ist. Ist der Ventilkern von dem Ventilgehäuse aufgrund einer translatorischen Bewegung beabstandet, ist hingegen eine Lagerung nicht unbedingt erforderlich. Gemäß einer ersten alternativen Ausgestaltung ist die Schaltwelle rotatorisch bewegbar und gemäß einer zweiten alternativen Ausgestaltung ist die Schaltwelle translatorisch bewegbar.

Im Fall der ersten Alternative wird der Ventilkern bei einem Schaltvorgang durch die Schaltwelle in Rotation versetzt und die translatorische Bewegung erfolgt selbsttätig durch Einrichtungen, welche dem Ventilkern und dem Ventilgehäuse zugeordnet sind. Dies kann beispielsweise durch eine in den Ventilkern und den Kammerboden eingeformte Verstelleinrichtung in Form einer umlaufenden Berg- und Talstruktur erfolgen.

Im Fall der zweiten Alternative wird der Ventilkern durch die Schaltwelle translatorisch bewegt und die rotatorische Bewegung erfolgt selbsttätig durch Einrichtungen, welche dem Ventilkern und dem Ventilgehäuse zugeordnet sind. Dies kann beispielsweise durch eine zwischen Ventilkern und Ventilgehäuse angeordnete Verstelleinrichtung in Form eines Sperrspannwerks erfolgen.

Die Schaltwelle kann mit einer ersten Rastanordnung und der Ventilkern mit einer zweiten Rastanordnung versehen sein, wobei die erste Rastanordnung und die zweite Rastanordnung wirkverbunden sind. Durch die Rastanordnungen ergeben sich diskrete Positionen des Ventilkerns relativ zu der Schaltwelle, so dass wiederum eine korrekte Zuordnung der Kanalstruktur zu den Fluidöffnungen sichergestellt werden kann. Dabei kann die Positionierung des Ventilkerns relativ zu dem Ventilgehäuse unabhängig von einem außerhalb des Rotationsventils angeordneten Aktor erfolgen. Dadurch kann der Aktor, welcher den Ventilkern bewegt, besonders einfach und kostengünstig ausgebildet sein. Dabei ist die Stellung des Ventilkerns durch die im Inneren des Rotationsventils angeordnete Rastanordnung vorgegeben, so dass es für die Einstellung beziehungsweise Kalibrierung des Rotationsventils nicht erforderlich ist, einen außen an dem Rotationsventil angeordneten Aktor auf das Rotationsventil beziehungsweise auf die Schaltpositionen abzustimmen.

Die erste Rastanordnung und die zweite Rastanordnung können eine überlagerte Rotations- und Translationsbewegung bewirken. Hierzu können die beiden Rastanordnungen so ausgebildet sein, dass der Ventilkern selbsttätig eine Rotationsbewegung ausführt, wenn der Ventilkern über die Schaltwelle translatorisch bewegt wurde. Dies ermöglicht eine besonders einfache Ausgestaltung des die Schaltwelle bewegenden Aktors und es erfolgt eine durch die Rastanordnungen vorgegebene Rotationsbewegung.

Die erste Rastanordnung kann sternförmig ausgebildet sein und radial von der Schaltwelle abragende Rampenelemente aufweisen. Die zweite Rastanordnung ist vorzugsweise materialeinheitlich und einstückig in den Ventilkern eingeformt und kongruent zu der ersten Rastanordnung ausgebildet. Die Rampenelemente bewirken, dass sich der Ventilkern entlang dieser Rampenelemente bewegt, sobald der Ventilkern über die Schaltwelle translatorisch bewegt wurde. Dabei führt der Ventilkern bei jeder translatorischen Bewegung aus dem Ventilgehäuse heraus eine definierte Rotationsbewegung aus, wobei sich das Winkelmaß aus der Länge der Rampenelemente ergibt.

Vorzugsweise ist eine Feder vorgesehen, welche den Ventilkern selbsttätig an den Kammerboden andrückt. Dadurch ist sichergestellt, dass der Ventilkern lagerichtig zu dem Ventilgehäuse positioniert ist und insbesondere nach Schaltvorgängen den Ventilkern in das Ventilgehäuse eindrückt.

Das Ventilgehäuse kann von einem Sammler umgeben sein. Dabei kann der Sammler gleichzeitig die Außenwand des Ventilgehäuses bilden. Zwischen der Kammerwand, welche aus dem Ventilgehäuse ausgebildet ist, und dem Sammler kann sich dabei ein Zwischenraum ergeben. Dadurch ist das Rotationsventil einerseits besonders leicht, andererseits aber auch mechanisch stabil.

Das Ventilgehäuse und/oder der Ventilkörper können als Spritzgussteil ausgebildet sein. Dadurch sind sowohl das Ventilgehäuse als auch der Ventilkörper kostengünstig herstellbar. Der Sammler kann als Blasformteil ausgebildet sein. Dadurch kann der Sammler eine komplexe Außengeometrie aufweisen, gleichzeitig aber kostengünstig herstellbar sein.

Das Ventilgehäuse, der Ventilkörper und/oder der Sammler bestehen vorzugsweise aus Kunststoff. Vorzugsweise gelangt dabei ein spritzgießfähiger thermoplastischer Kunststoff zum Einsatz. Dadurch ergibt sich ein kostengünstig herstellbares Rotationsventil. Bevorzugte Werkstoffe für das Ventilgehäuse und den Ventilkern sind aus den Kunststoffen Polyoxymethylene (POM), Polyphenylensulfid (PPS) oder Polyamide (PA) ausgewählt. Die Kunststoffe können mit Zuschlägen, beispielsweise einer Faserverstärkung basierend auf Glasfasern versehen sein. Die Schaltwelle ist vorzugsweise aus faserverstärktem Kunststoffmaterial ausgebildet. Alternativ kann die Schaltwelle auch aus metallischem Werkstoff ausgebildet sein. Der Sammler ist vorzugsweise aus Polypropylen (PP) ausgebildet. Sofern der Ventilkern außenumfangsseitig im Bereich der Kanalstruktur mit einer Dichtkontur versehen ist, ist insbesondere denkbar, dass die Dichtkontur aus thermoplastischem Elastomer ausgebildet ist und der Ventilkern im Zweikomponentenspritzguss hergestellt ist.

Die Fluidöffnungen sind vorzugsweise als Anschlussstutzen ausgebildet. Die Anschlussstutzen sind dabei geeignet, Fluidleitungen in Form von Rohren und/oder Schläuchen aufzunehmen. Diese können dann einfach und kostengünstig an das Rotationsventil angebunden werden.

Ein erfindungsgemäßer Temperierkreislauf umfasst zumindest ein Rotationsventil der zuvor beschriebenen Art. Der Temperierkreislauf kann dabei eine oder auch mehrere Komponenten eines Elektrofahrzeugs, beispielsweise einen Akkumulator, eine Leistungselektronik oder eine Leitungs-, beziehungsweise Steckerkomponente temperieren. Derartige Komponenten weisen eine optimale Leistungsfähigkeit nur in einem begrenzten Temperaturintervall auf und müssen dementsprechend je nach Umgebungsbedingungen und Leistungsanforderungen erwärmt oder gekühlt werden.

Dementsprechend kann die Temperiereinrichtung neben einer Fördereinrichtung eine Heizeinrichtung und eine Kühleinrichtung umfassen. Die Ansteuerung der zu temperierenden Komponenten, der Heizeinrichtung und der Kühleinrichtung erfolgt über das Rotationsventil.

Einige Ausgestaltungen des erfindungsgemäßen Rotationsventils werden nachfolgend anhand der Figuren näher erläutert. Diese zeigen, jeweils schematisch:
- Fig. 1: ein Rotationsventil gemäß erster Alternative im Schnitt;
- Fig. 2: ein Rotationsventil gemäß zweiter Alternative im Schnitt mit Blick auf die Rastanordnung;
- Fig. 3: das Rotationsventil gemäß Fig. 2 im Schnitt mit Blick auf die Aufnahmeöffnung;
- Fig. 4: im Detail den Ventilkern des Rotationsventils gemäß Fig. 2;
- Fig. 5: im Detail das Ventilgehäuse des Rotationsventils gemäß Fig. 2 im Schnitt;
- Fig. 6: ein Rotationsventil gemäß dritter Alternative im Schnitt mit Blick auf den Deckel;
- Fig. 7: das Rotationsventil gemäß Fig. 6 im Schnitt mit Blick auf die Rastanordnung;
- Fig. 8: im Detail die Schaltwelle des Rotationsventils gemäß Figur 6;

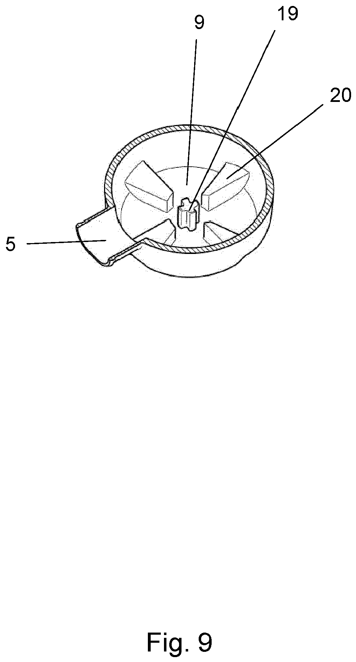

- Fig. 9: im Schnitt das Ventilgehäuse des Rotationsventils gemäß Figur 6 im Bereich des Kammerbodens im Schnitt;
- Fig. 10: im Detail das Ventilgehäuse des Rotationsventils gemäß Figur 6;
- Fig. 11: im Detail der Sammler des Rotationsventils gemäß Figur 6.

Die Figuren zeigen ein Rotationsventil 1 als Bestandteil eines Kühlkreislaufs einer zu klimatisierenden Einrichtung. Vorzugsweise gelangt das Rotationsventil 1 in elektromobilen Anwendungen zum Einsatz. Dabei kann das Rotationsventil 1 in einen Temperierkreislauf eines elektromotorischen Antriebs eines Elektrofahrzeugs eingebunden sein und beispielsweise Akkumulatoren, Elektromotoren, die Leistungselektronik oder dergleichen temperieren. Durch das Rotationsventil 1 können Kühlmittelströme des Temperierkreislaufs modifiziert werden. In diesem Zusammenhang ist es denkbar, den Volumenstrom des Kühlmittels zu modifizieren, also zu vergrößern oder zu verkleinern. Des Weiteren kann durch die Änderung der Ventilstellung des Ventilkerns die Strömungsrichtung des Kühlmittels geändert werden. Schließlich können verschiedene Komponenten der zu temperierenden Einrichtungen gezielt mit Kühlmittel versorgt oder von der Kühlmittelversorgung abgeschnitten werden. Je nach Umgebungstemperatur und Leistungsanforderungen kann beispielsweise ein Kühlmittelstrom zunächst ausschließlich zu den Akkumulatoren geleitet werden und dort je nach Umgebungstemperaturen die Akkumulatoren kühlen oder erwärmen. Bei hohen Leistungsanforderungen kann ein Kühlmittelstrom zu der Leistungselektronik und auch zu den Elektromotoren geleitet werden, um diese Komponenten zu kühlen. Die Modifikation des Kühlmittelstroms erfolgt dabei mittels des Rotationsventils 1. Dabei kann das Rotationsventil 1 mehrere Magnetventile ersetzen, so dass der Temperierkreislauf kostengünstig herstellbar ist.

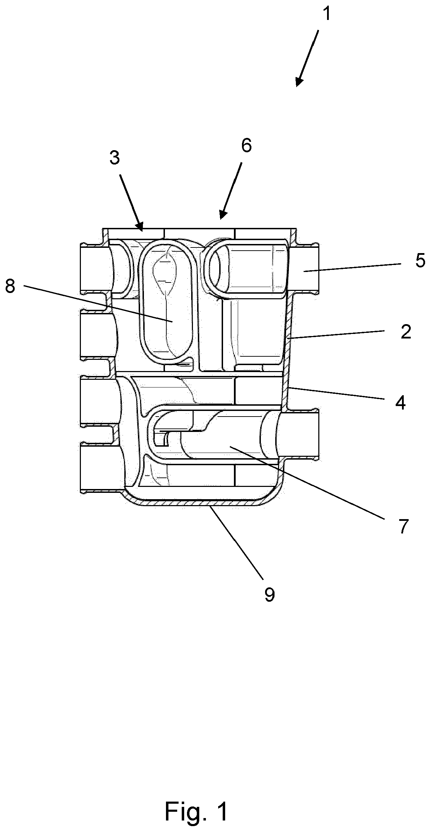

Das in Ausgestaltungen gemäß der Figuren 1, 2 und 6 gezeigte Rotationsventil 1 umfasst ein Ventilgehäuse 2 mit einer Ventilkammer 3, wobei die Ventilkammer 3 eine Kammerwand 4 aufweist. In die Kammerwand 4 sind sechs Fluidöffnungen 5 eingebracht. Die Ventilkammer 3 ist rotationssymmetrisch ausgebildet und weist eine im Wesentlichen konische Kammerwand 4 auf. In die Ventilkammer 3 ist stirnseitig eine Aufnahmeöffnung 6 eingebracht, über die ein Ventilkern 7 in die Ventilkammer 3 eingebracht ist. Der Ventilkern 7 ist mit einer Kanalstruktur 8 versehen, welche mit den Fluidöffnungen 5 zusammenwirkt. Der Ventilkern 7 ist rotatorisch beweglich in der Ventilkammer 3 gelagert. Je nach Stellung der Ventilkammer 3 und der zu den Fluidöffnungen 5 ausgerichteten Kanalstruktur 8 ergeben sich verschiedene Transportrichtungen für das über die Fluidöffnungen 5 ein- und ausströmende Fluid.

Das Ventilgehäuse 2 ist außenseitig von einem Sammler 14 umgeben. Das Ventilgehäuse 2, der Ventilkern 7 und der Sammler 14 bestehen aus einem thermoplastischen Kunststoff. Das Ventilgehäuse 2 und der Ventilkern 7 sind als Spritzgussteil ausgebildet. Der Sammler 14 ist als Blasformteil ausgebildet.

Die Fluidöffnungen 5 sind als Anschlussstutzen ausgebildet. Dabei erstreckt sich ein rohrförmiger Abschnitt der Fluidöffnungen 5 in den Sammler 14 hinein. Der Sammler 14 weist entsprechende, ebenfalls als Anschlussstutzen ausgebildete, Abschnitte auf. Diese sind ausgebildet, Rohrleitungen oder Schläuche aufzunehmen.

Figur 1 zeigt eine Schnittdarstellung des Rotationsventils 1 gemäß einer ersten Ausgestaltung. Figur 1 kann entnommen werden, dass die Ventilkammer 3 konisch ausgebildet ist. Der Ventilkern 7 ist außenumfangsseitig kongruent zu der Ventilkammer 3 und damit ebenfalls konisch ausgebildet. Die Ventilkammer 3 ist durch die Kammerwand 4 und einen Kammerboden 9 begrenzt. Dabei umgibt die Kammerwand 4 den Ventilkern 7, wobei sich der Durchmesser der Kammerwand 4 ausgehend von dem Kammerboden 9 in Richtung der Aufnahmeöffnung 6 erweitert. Zum Verstellen des Ventilkerns 7 und um die Kanalstruktur 8 relativ zu den Fluidöffnungen 5 zu verdrehen, kann der Ventilkern sowohl translatorisch als auch rotatorisch zu dem Ventilgehäuse 2 verfahren werden. Dabei kann ein Aktor in Eingriff mit dem Ventilkern 7 gebracht werden, welcher eine überlagerte rotatorische und translatorische Bewegung ausführt. Durch die translatorische Bewegung entsteht zwischen Ventilgehäuse 2 und Ventilkern 7 ein Spalt, was ein reibungsarmes Verdrehen des Ventilkerns 7 relativ zu dem Ventilgehäuse 2 ermöglicht.

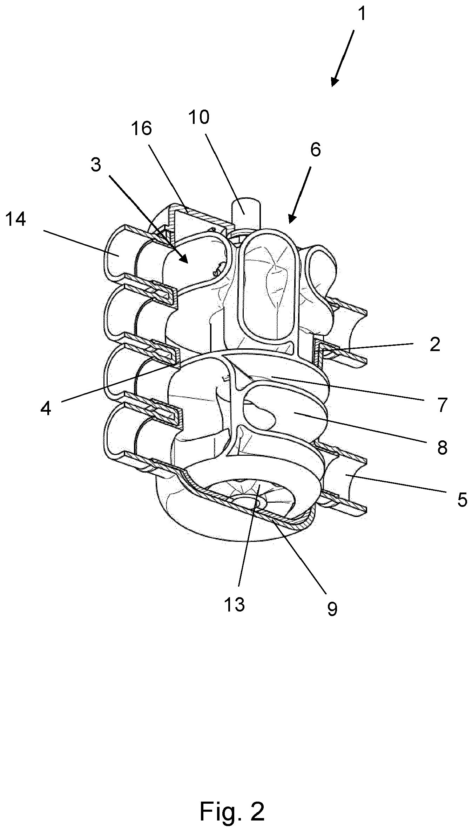

Figur 2 zeigt eine Schnittdarstellung des Rotationsventils 1 gemäß einer zweiten Ausgestaltung. Bei der Ausgestaltung gemäß Figur 2 ist die Ventilkammer 3 ebenfalls konisch ausgebildet. Der Ventilkern 7 ist außenumfangsseitig kongruent zu der Ventilkammer 3 und damit ebenfalls konisch ausgebildet. Die Ventilkammer 3 ist durch die Kammerwand 4 und einen Kammerboden 9 begrenzt. Dabei umgibt die Kammerwand 4 den Ventilkern 7, wobei sich der Durchmesser der Kammerwand 4 ausgehend von dem Kammerboden 9 in Richtung der Aufnahmeöffnung 6 erweitert.

Der Ventilkern 7 ist sowohl rotatorisch als auch translatorisch in der Ventilkammer 3 gelagert. Zum Verstellen des Ventilkerns 7 und um die Kanalstruktur 8 relativ zu den Fluidöffnungen 5 zu verdrehen, kann der Ventilkern sowohl translatorisch als auch rotatorisch zu dem Ventilgehäuse 2 verfahren werden.

Bei der vorliegenden Ausgestaltung ist dabei aber nur ein Aktor erforderlich, der lediglich eine rotatorische Bewegung ausführt. Damit sich der Ventilkern 7 beim Verdrehen gleichzeitig translatorisch bewegt, sind im Bereich des Kammerbodens 9 in das Ventilgehäuse 2 Rampenelemente 13 in Form einer umlaufenden Berg- und Talstruktur eingebracht. Diese bilden eine Verstelleinrichtung. Der Ventilkern 7 ist auf der dem Kammerboden zugewandten Seite mit kongruenten Rampenelementen versehen. Beim Verdrehen gleiten die Rampenelemente 13 des Ventilkerns 7 an den Rampenelementen 13 des Ventilgehäuses 2 ab, so dass sich der Ventilkern 7 gleichzeitig zu der rotarischen Bewegung auch translatorisch bewegt. Sobald der Ventilkern die nächste Position erreicht, senkt sich der Ventilkern 7 wieder ab, so dass der Ventilkern 7 wieder an der Kammerwand 4 anliegt. Durch die translatorische Bewegung entsteht zwischen Ventilgehäuse 2 und Ventilkern 7 ein Spalt, was ein Verdrehen des Ventilkerns 7 relativ zu dem Ventilgehäuse 2 erleichtert.

Die Aufnahmeöffnung 6 des Ventilgehäuses 2 ist durch einen Deckel 16 verschlossen, wobei eine Schaltwelle 10 durch den Deckel 16 hindurchragt. Die Schaltwelle 10 ist drehfest mit einem Verdrehelement 15 verbunden, wobei das Verdrehelement 15 in eine in den Ventilkern 7 eingebrachte Ausnehmung 21 eingreift. Das Verdrehelement 15 weist außenumfangsseitig eine Verzahnung auf, welche in eine in den Innenumfang der Ausnehmung 21 eingebrachte, kongruent ausgebildete Verzahnung eingreift und so eine Übertragung des Drehmomentes von der Schaltwelle 10 auf den Ventilkern 7 ermöglicht. Dabei ist das Verdrehelement 15 translatorisch beweglich in der Ausnehmung 21 angeordnet. Durch diese Ausgestaltung wird die durch die Rampenelemente 13 verursachte translatorische Bewegung des Ventilkerns 7 nicht in die Schaltwelle 10 übertragen.

Zwischen Deckel 16 und Ventilkern 7 ist eine Feder 17 angeordnet, welche den Ventilkern 7 auf den Kammerboden 9 andrückt.

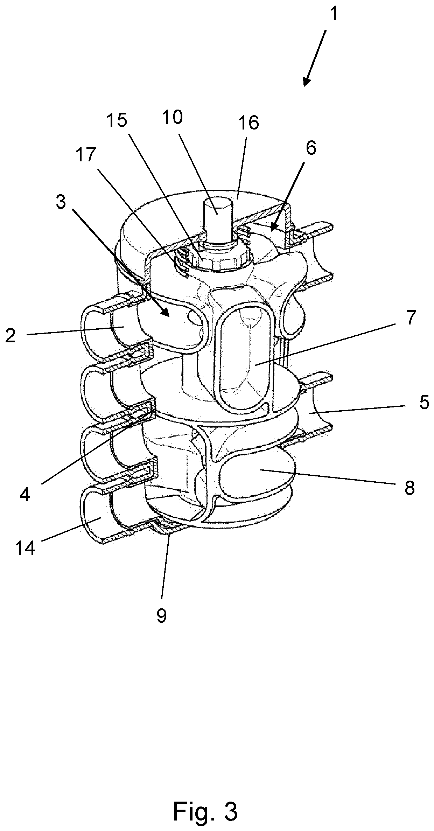

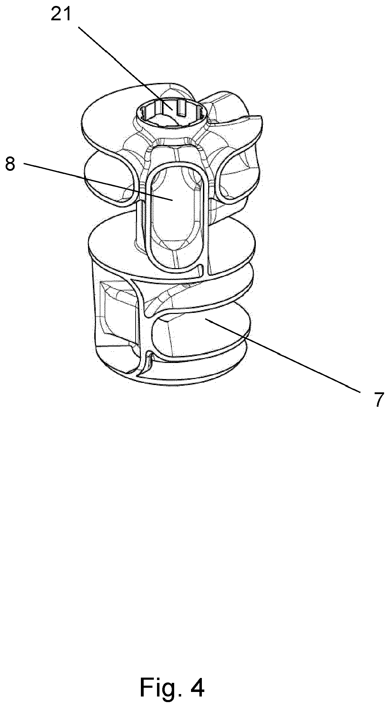

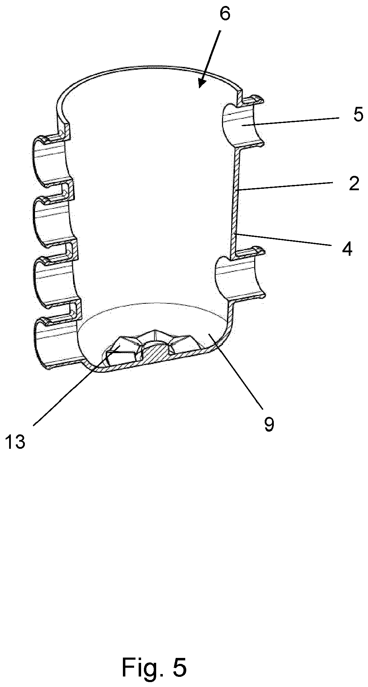

Figur 3 zeigt das Rotationsventil 1 gemäß Figur 2 im Schnitt mit Ansicht von schräg oben. Figur 4 zeigt im Detail den Ventilkern 7 des Rotationsventils 1 gemäß Figur 2. Figur 5 zeigt im Detail das Ventilgehäuse 2 des Rotationsventils gemäß Figur 2 im Schnitt.

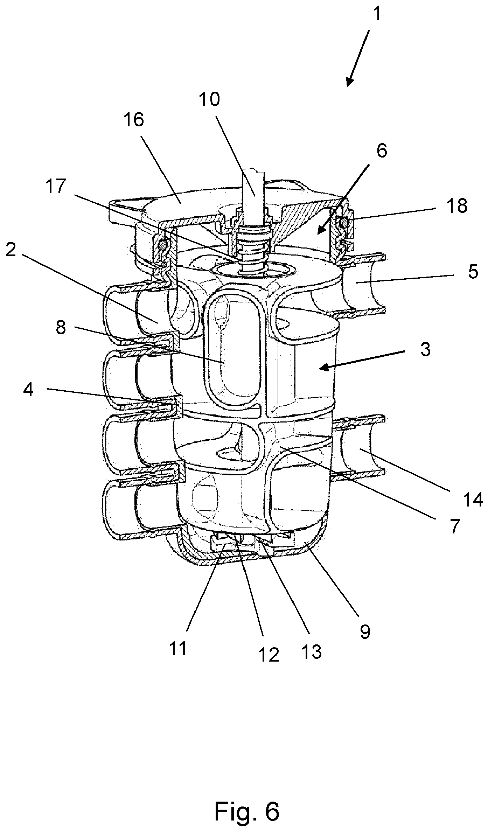

Figur 6 zeigt eine Schnittdarstellung des Rotationsventils 1 gemäß einer dritten Ausgestaltung. Bei der Ausgestaltung gemäß Figur 6 ist die Ventilkammer 3 ebenfalls konisch ausgebildet. Der Ventilkern 7 ist außenumfangsseitig kongruent zu der Ventilkammer 3 und damit ebenfalls konisch ausgebildet. Die Ventilkammer 3 ist durch die Kammerwand 4 und einen Kammerboden 9 begrenzt. Dabei umgibt die Kammerwand 4 den Ventilkern 7, wobei sich der Durchmesser der Kammerwand 4 ausgehend von dem Kammerboden 9 in Richtung der Aufnahmeöffnung 6 erweitert.

Der Ventilkern 7 ist sowohl rotatorisch als auch translatorisch in der Ventilkammer 3 gelagert. Zum Verstellen des Ventilkerns 7 und um die Kanalstruktur 8 relativ zu den Fluidöffnungen 5 zu verdrehen, kann der Ventilkern sowohl translatorisch als auch rotatorisch zu dem Ventilgehäuse 2 verfahren werden.

Bei der vorliegenden Ausgestaltung ist dabei aber nur ein Aktor erforderlich, der lediglich eine translatorische Bewegung ausführt.

In die Mittelachse des Ventilkerns 7 ist eine in axialer Richtung verlaufende Bohrung eingebracht, welche eine Schaltwelle 10 aufnimmt. Im Bereich des Kammerbodens 9 ist die Schaltwelle 10 mit einer ersten Rastanordnung 11 versehen. Hierzu ist die erste Rastanordnung 11 sternförmig ausgebildet und weist radial von der Schaltwelle 10 abragende Rampenelemente 13 auf. Diese kommen an der dem Kammerboden 9 zugewandten Seite des Ventilkerns 7 an dem Ventilkern 7 zur Anlage. An dem Ventilkern 7 ist in dem entsprechenden Bereich eine zweite Rastanordnung 12 ausgebildet. Diese umfasst ebenfalls Rampenelemente 13.

Der Ventilkern 7 ist relativ zu der Schaltwelle 10 translatorisch und rotatorisch beweglich. Relativ zu dem Ventilgehäuse 2 ist die Schaltwelle 10 lediglich translatorisch beweglich. Zur Zentrierung der Schaltwelle 10 ist aus dem Kammerboden 9 ein kreuzförmiger Zentrierdorn 19 ausgebildet, wobei die kreuzförmige Ausgestaltung gleichzeitig eine Rotation der Schaltwelle 10 unterbindet. Aus dem Kammerboden ist eine dritte Rastanordnung 20 ausgebildet, welche ebenfalls Rampenelemente 13 aufweisen.

Die Aufnahmeöffnung 6 des Ventilgehäuses 2 ist durch einen Deckel 16 verschlossen, wobei die Schaltwelle 10 durch den Deckel 16 hindurchragt. Zwischen Deckel 16 und Ventilkern 7 ist eine Feder 17 angeordnet, welche den Ventilkern 7 auf den Kammerboden 9 andrückt. Zwischen Deckel 16 und Ventilgehäuse 2 ist eine Dichtung 18 in Form eines O-Rings angeordnet. Ein weiteres Dichtelement ist zwischen Deckel 16 und Schaltwelle 10 angeordnet, wobei das weitere Dichtelemente den Durchgang der Schaltwelle 10 durch den Deckel 16 abdichtet.

Bei der vorliegenden Ausgestaltung ist der Deckel 16 kraft-/formschlüssig an dem Ventilgehäuse 2 gehalten. In alternativen Ausgestaltungen kann der Deckel 16 auch stoffschlüssig an dem Ventilgehäuse 2 fixiert sein. Eine stoffschlüssige Verbindung kann beispielsweise durch Schweißen oder Kleben hergestellt werden. Bei dieser Ausgestaltung ist keine gesonderte Abdichtung zwischen Ventilgehäuse 2 und Deckel 16 erforderlich.

Ein Verdrehen des Ventilkerns 7 relativ zu dem Ventilgehäuse 2 erfolgt dadurch, dass die Schaltwelle 10 translatorisch bewegt wird. Dabei hebt die Schaltwelle 10 den Ventilkern 7 an und die erste Rastanordnung 11 und die zweite Rastanordnung 12 gelangen aneinander zur Anlage. Ist der Ventilkern 7 so weit angehoben, dass die einander zugewandten Kanten von erster Rastanordnung 11 und dritter Rastanordnung 20 fluchten, gleitet der Ventilkern 7 über dessen zweite Rastanordnung 12 durch eine überlagerte translatorische und rotatorische Bewegung, vorgespannt durch die Feder 17, an den Schrägen der ersten Rastanordnung 11 und dritten Rastanordnung 20 entlang, so dass sich die den Fluidöffnungen 5 zugeordnete Kanalstruktur 8 ändert. Dabei ist das Maß der Drehbewegung von der Ausgestaltung der Schräge der Rampenelemente 13 abhängig. Der Winkel, um den sich der Ventilkern 7 verdreht, ist dabei durch die Ausgestaltung der Rastanordnungen 11, 12, 20 vorgegeben. Diese sind so auf die Kanalstruktur 8 abgestimmt, dass jede Position mit einer gewünschten Positionierung der Kanalstruktur 8 relativ zu den Fluidöffnungen 5 übereinstimmt.

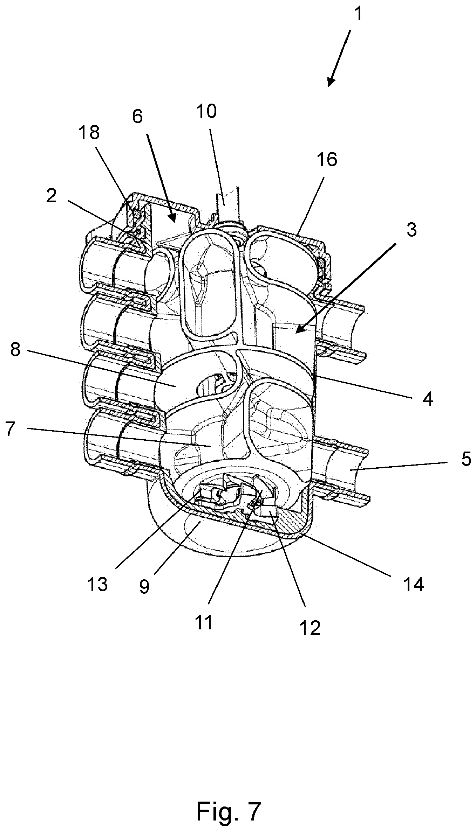

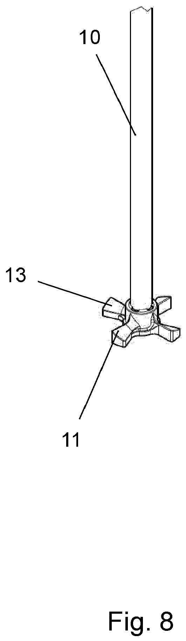

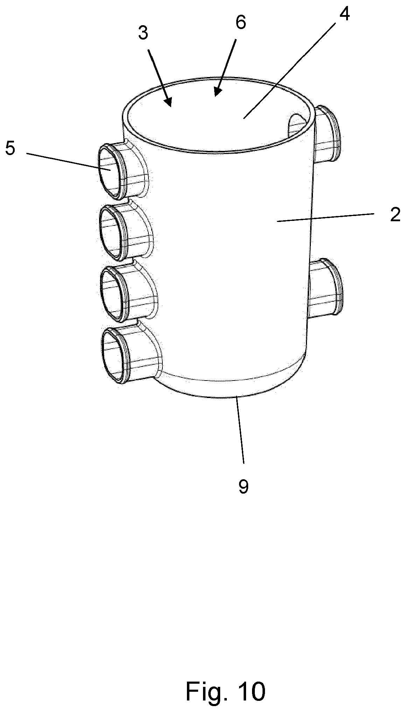

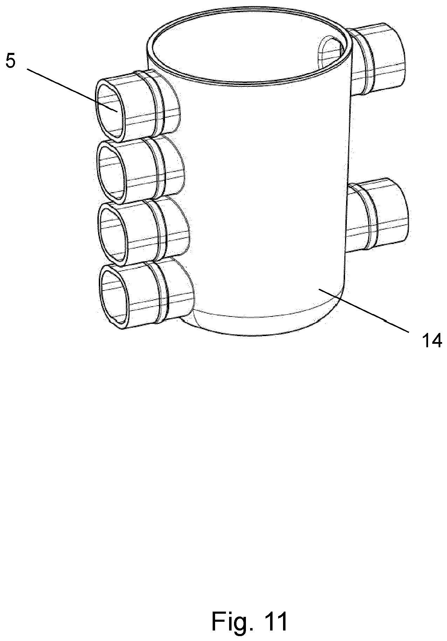

Figur 7 zeigt das Rotationsventil gemäß Figur 6 im Schnitt von schräg unten. Figur 8 zeigt im Detail die Schaltwelle 10 des Rotationsventils 1 gemäß Figur 6. Figur 8 zeigt im Schnitt das Ventilgehäuse 2 des Rotationsventils 1 gemäß Figur 6 im Bereich des Kammerbodens 9 im Schnitt. Figur 10 zeigt im Detail das Ventilgehäuse 2 des Rotationsventils 1 gemäß Figur 6, und Figur 11 zeigt im Detail den Sammler 14 des Rotationsventils 1 gemäß Figur 6.

## Patentansprüche

1. Rotationsventil (1), umfassend ein Ventilgehäuse (2) mit einer Ventilkammer (3), wobei die Ventilkammer (3) eine Kammerwand (4) aufweist, in die mindestens zwei Fluidöffnungen (5) eingebracht sind, wobei die Ventilkammer (3) stirnseitig eine Aufnahmeöffnung (6) aufweist, wobei die Ventilkammer (3) einen Ventilkern (7) aufnimmt, wobei der Ventilkern (7) mit einer Kanalstruktur (8) versehen ist, welche mit den Fluidöffnungen (5) zusammenwirkt, wobei der Ventilkern (7) rotatorisch beweglich in der Ventilkammer (3) gelagert ist, **dadurch gekennzeichnet, dass** die Ventilkammer (3) konisch ausgebildet ist.

2. Rotationsventil nach Anspruch 1, **dadurch gekennzeichnet, dass** der Ventilkern (7) außenumfangsseitig konisch ausgebildet ist.

3. Rotationsventil nach Anspruch 1 oder 2, **dadurch gekennzeichnet, dass** die Ventilkammer (3) durch die Kammerwand (4) und einen Kammerboden (9) begrenzt ist, wobei die Kammerwand (4) den Ventilkern (7) umgibt, wobei sich der Durchmesser der Kammerwand (4) ausgehend von dem Kammerboden (9) in Richtung der Aufnahmeöffnung (6) erweitert.

4. Rotationsventil nach einem der Ansprüche 1 bis 3, **dadurch gekennzeichnet, dass** der Ventilkern (7) translatorisch in der Ventilkammer (3) gelagert ist.

5. Rotationsventil nach Anspruch 3 oder 4, **dadurch gekennzeichnet, dass** in den Kammerboden (9) und/oder in dem dem Kammerboden (9) zugewandten Abschnitt des Ventilkerns (7) eine Verstelleinrichtung eingeformt ist.

6. Rotationsventil nach einem der Ansprüche 1 bis 5, **dadurch gekennzeichnet, dass** der Ventilkern (7) eine Schaltwelle (10) aufnimmt.

7. Rotationsventil nach Anspruch 6, **dadurch gekennzeichnet, dass** die Schaltwelle (10) rotatorisch und/oder translatorisch bewegbar ist.

8. Rotationsventil nach Anspruch 6 oder 7, **dadurch gekennzeichnet, dass** die Schaltwelle (10) mit einer ersten Rastanordnung (11) und der Ventilkern (7) mit einer zweiten Rastanordnung (12) versehen sind, wobei die erste Rastanordnung (11) und die zweite Rastanordnung (12) wirkverbunden sind.

9. Rotationsventil nach Anspruch 8, **dadurch gekennzeichnet, dass** die erste Rastanordnung (11) und die zweite Rastanordnung (12) eine überlagerte Rotations- und Translationsbewegung des Ventilkerns (7) relativ zu dem Ventilgehäuse (2) bewirken.

10. Rotationsventil nach Anspruch 8 oder 9, **dadurch gekennzeichnet, dass** die erste Rastanordnung (11) sternförmig ausgebildet ist und radial von der Schaltwelle (9) abragende Rampenelemente (13) aufweist.

11. Rotationsventil nach einem der Ansprüche 3 bis 10, **dadurch gekennzeichnet, dass** eine Feder (17) vorgesehen ist, welche den Ventilkern (7) selbsttätig an den Kammerboden (9) andrückt.

12. Rotationsventil nach einem der Ansprüche 1 bis 11, **dadurch gekennzeichnet, dass** das Ventilgehäuse (2) außenseitig von einem Sammler (14) umgeben ist.

13. Rotationsventil nach einem der Ansprüche 1 bis 12, **dadurch gekennzeichnet, dass** das Ventilgehäuse (2), der Ventilkern (7) und/oder der Sammler (14) aus Kunststoff ausgebildet sind.

14. Rotationsventil nach einem der Ansprüche 1 bis 13, **dadurch gekennzeichnet, dass** die Fluidöffnungen (5) als Anschlussstutzen ausgebildet sind.

15. Temperierkreislauf, umfassend zumindest ein Rotationsventil nach einem der vorherigen Ansprüche.

## Geänderte Patentansprüche

### Geänderte Patentansprüche gemäss Regel 137(2) EPÜ.

1. Rotationsventil (1), umfassend ein Ventilgehäuse (2) mit einer Ventilkammer (3), wobei die Ventilkammer (3) eine Kammerwand (4) aufweist, in die mindestens zwei Fluidöffnungen (5) eingebracht sind, wobei die Ventilkammer (3) stirnseitig eine Aufnahmeöffnung (6) aufweist, wobei die Ventilkammer (3) einen Ventilkern (7) aufnimmt, wobei der Ventilkern (7) mit einer Kanalstruktur (8) versehen ist, welche mit den Fluidöffnungen (5) zusammenwirkt, wobei der Ventilkern (7) rotatorisch beweglich in der Ventilkammer (3) gelagert ist, **dadurch gekennzeichnet, dass** die Ventilkammer (3) konisch ausgebildet ist, wobei die Ventilkammer (3) durch die Kammerwand (4) und einen Kammerboden (9) begrenzt ist, wobei die Kammerwand (4) den Ventilkern (7) umgibt, wobei sich der Durchmesser der Kammerwand (4) ausgehend von dem Kammerboden (9) in Richtung der Aufnahmeöffnung (6) erweitert, wobei in dem dem Kammerboden (9) zugewandten Abschnitt des Ventilkerns (7) eine Verstelleinrichtung eingeformt ist.

2. Rotationsventil nach Anspruch 1, **dadurch gekennzeichnet, dass** der Ventilkern (7) außenumfangsseitig konisch ausgebildet ist.

3. Rotationsventil nach einem der Ansprüche 1 bis 2, **dadurch gekennzeichnet, dass** der Ventilkern (7) translatorisch in der Ventilkammer (3) gelagert ist.

4. Rotationsventil nach Anspruch 3, **dadurch gekennzeichnet, dass** in den Kammerboden (9) eine Verstelleinrichtung eingeformt ist.

5. Rotationsventil nach einem der Ansprüche 1 bis 4, **dadurch gekennzeichnet, dass** der Ventilkern (7) eine Schaltwelle (10) aufnimmt.

6. Rotationsventil nach Anspruch 5, **dadurch gekennzeichnet, dass** die Schaltwelle (10) rotatorisch und/oder translatorisch bewegbar ist.

7. Rotationsventil nach Anspruch 5 oder 6, **dadurch gekennzeichnet, dass** die Schaltwelle (10) mit einer ersten Rastanordnung (11) und der Ventilkern (7) mit einer zweiten Rastanordnung (12) versehen sind, wobei die erste Rastanordnung (11) und die zweite Rastanordnung (12) wirkverbunden sind.

8. Rotationsventil nach Anspruch 7, **dadurch gekennzeichnet, dass** die erste Rastanordnung (11) und die zweite Rastanordnung (12) eine überlagerte Rotations- und Translationsbewegung des Ventilkerns (7) relativ zu dem Ventilgehäuse (2) bewirken.

9. Rotationsventil nach Anspruch 7 oder 8, **dadurch gekennzeichnet, dass** die erste Rastanordnung (11) sternförmig ausgebildet ist und radial von der Schaltwelle (9) abragende Rampenelemente (13) aufweist.

10. Rotationsventil nach einem der Ansprüche 3 bis 9, **dadurch gekennzeichnet, dass** eine Feder (17) vorgesehen ist, welche den Ventilkern (7) selbsttätig an den Kammerboden (9) andrückt.

11. Rotationsventil nach einem der Ansprüche 1 bis 10, **dadurch gekennzeichnet, dass** das Ventilgehäuse (2) außenseitig von einem Sammler (14) umgeben ist.

12. Rotationsventil nach einem der Ansprüche 1 bis 11, **dadurch gekennzeichnet, dass** das Ventilgehäuse (2), der Ventilkern (7) und/oder der Sammler (14) aus Kunststoff ausgebildet sind.

13. Rotationsventil nach einem der Ansprüche 1 bis 12, **dadurch gekennzeichnet, dass** die Fluidöffnungen (5) als Anschlussstutzen ausgebildet sind.

14. Temperierkreislauf, umfassend zumindest ein Rotationsventil nach einem der vorherigen Ansprüche.
